(19) Europäisches Patentamt / European Patent Office / Office européen des brevets

(11) **EP 3 062 471 B1**

## (12) EUROPEAN PATENT SPECIFICATION

(45) Date of publication and mention
of the grant of the patent:
**17.10.2018 Bulletin 2018/42**

(21) Application number: **15305281.6**

(22) Date of filing: **24.02.2015**

(51) Int Cl.:
*H04L 25/02* (2006.01)  *H04B 3/32* (2006.01)
*H04L 25/03* (2006.01)  *H04L 27/26* (2006.01)
*H04L 25/497* (2006.01)  *H04J 13/00* (2011.01)

(54) **SCALED ORTHOGONAL PILOT SEQUENCES FOR PARALLEL CHANNEL ESTIMATION**

SKALIERTE, ORTHOGONALE PILOTSEQUENZEN ZUR PARALLELEN KANALSCHÄTZUNG

SÉQUENCES PILOTES ORTHOGONALES ÉCHELONNÉES POUR UNE ESTIMATION DE CANAUX PARALLÈLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.08.2016 Bulletin 2016/35**

(73) Proprietor: **Alcatel Lucent
91620 Nozay (FR)**

(72) Inventors:
• **Bastos Moraes, Rodrigo**
**2018 Antwerpen (BE)**
• **Tsiaflakis, Paschalis**
**2018 Antwerpen (BE)**
• **Coomans, Werner**
**2018 Antwerp (BE)**
• **Maes, Jochen**
**2018 Antwerpen (BE)**

(74) Representative: **Nokia Bell Patent Attorneys
Copernicuslaan 50
2018 Antwerp (BE)**

(56) References cited:
**WO-A1-2014/054043    WO-A1-2015/028445**

• **VLADIMIR OKSMAN LANTIQ: "G.fast: Channel
estimation method for
G.fast;TD2013-01-Q4-039", ITU-T DRAFT ;
STUDY PERIOD 2013-2016, INTERNATIONAL
TELECOMMUNICATION UNION, GENEVA ; CH,
vol. 4/15, 23 January 2013 (2013-01-23), pages 1-6,
XP044037028, [retrieved on 2013-01-23]**
• **YUSUNG LEE ET AL: "A RAKE Receiver With an
ICI/ISI Equalizer for a CCK Modem", IEEE
TRANSACTIONS ON VEHICULAR
TECHNOLOGY, IEEE SERVICE CENTER,
PISCATAWAY, NJ, US, vol. 58, no. 1, 1 January
2009 (2009-01-01), pages 198-206, XP011226804,
ISSN: 0018-9545, DOI: 10.1109/TVT.2008.925001**
• **RAIED CAROMI ET AL: "Optimal sequential
channel estimation for multi-channel cognitive
radio", INFORMATION SCIENCES AND SYSTEMS
(CISS), 2012 46TH ANNUAL CONFERENCE ON,
IEEE, 21 March 2012 (2012-03-21), pages 1-6,
XP032241471, DOI: 10.1109/CISS.2012.6310850
ISBN: 978-1-4673-3139-5**

**Description**

**Technical Field of the Invention**

The present invention relates to crosstalk channel estimation within a wired communication system.

**Technical Background of the invention**

Crosstalk (or inter-channel interference) is a major source of channel impairment for wired communication systems, such as Digital Subscriber Line (DSL) communication systems.

As the demand for higher data rates increases, DSL systems are evolving toward higher frequency bands, wherein crosstalk between neighboring transmission lines (that is to say transmission lines that are in close vicinity over part or whole of their length, such as twisted copper pairs in a cable binder) is more pronounced (the higher frequency, the more coupling).

Different strategies have been developed to mitigate crosstalk and to maximize effective throughput, reach and line stability. These techniques are gradually evolving from static or dynamic spectral management techniques to multi-user signal coordination (vectoring hereinafter).

One technique for reducing inter-channel interference is joint signal precoding: the transmit data symbols are jointly passed through a precoder before being transmitted over the respective communication channels. The precoder is such that the concatenation of the precoder and the communication channels results in little or no inter-channel interference at the receivers.

A further technique for reducing inter-channel interference is joint signal post-processing: the receive data symbols are jointly passed through a postcoder before being detected. The postcoder is such that the concatenation of the communication channels and the postcoder results in little or no inter-channel interference at the receivers. Postcoders are also sometimes referred to as crosstalk cancellation filters.

More formally, a Multiple Input Multiple Output (MIMO) communication system can be described by the following linear model:

$$\mathbf{y}(k) = \mathbf{H}(k)\mathbf{x}(k) + \mathbf{z}(k) \quad (1),$$

wherein the NxN complex matrix $\mathbf{H}$ is referred to as the channel matrix: the (i,j)-th component hij of the channel matrix $\mathbf{H}$ describes how the communication system produces a signal on the i-th channel output in response to a signal being transmitted to the j-th channel input; the diagonal elements of the channel matrix describe direct channel coupling, and the off-diagonal elements of the channel matrix (also referred to as the crosstalk coefficients) describe inter-channel coupling,

wherein the N-component complex vector $\mathbf{x}$, respectively $\mathbf{y}$, denotes a discrete frequency representation, as a function of the frequency/carrier/tone index k, of the symbols transmitted over, respectively received from, the N communication channels,

and wherein the N-component complex vector $\mathbf{z}$ denotes additive noise over the N communication channels, such as Radio Frequency Interference (RFI) or thermal noise.

Linear signal precoding and post-processing are advantageously implemented by means of matrix products.

In downstream, the linear precoder performs a matrix-product in the frequency domain of a transmit vector $\mathbf{u}(k)$ with a precoding matrix $\mathbf{P}(k)$, i.e. $\mathbf{x}(k)=\mathbf{P}(k)\mathbf{u}(k)$ in eq. (1), the precoding matrix $\mathbf{P}(k)$ being such that the concatenated channel $\mathbf{H}(k)\mathbf{P}(k)$ is diagonalized, meaning the off-diagonal coefficients and thus the inter-channel interference mostly reduce to zero.

Practically, and as a first order approximation, the precoder superimposes anti-phase crosstalk pre-compensation signals over the victim line along with the direct signal that destructively interfere at the receiver with the actual crosstalk signals from the respective disturber lines.

In upstream, the linear postcoder performs a matrix-product in the frequency domain of the receive vector $\mathbf{y}(k)$ with a crosstalk cancellation matrix $\mathbf{Q}(k)$ to recover the transmit vector $\mathbf{u}(k)$ (after channel equalization and power normalization), the crosstalk cancellation matrix $\mathbf{Q}(k)$ being such that the concatenated channel $\mathbf{Q}(k)\mathbf{H}(k)$ is diagonalized.

Signal vectoring is typically performed at a traffic aggregation point as vectoring primarily implies that data symbols concurrently transmitted over, or received from, the vectored lines are bunched and passed all together through the precoder or postcoder. For instance, signal vectoring is advantageously performed within a Digital Subscriber Line Access Multiplexer (DSLAM) deployed at a Central office (CO), or as a fiber-fed remote unit closer to subscriber premises (street cabinet, pole cabinet, building cabinet, etc). Such a remote unit may also be referred to as a remote DSLAM, an Optical Network Unit (ONU), or a Distribution Point Unit (DPU). Signal precoding is particularly appropriate for downstream communication (toward customer premises), while signal post-processing is particularly appropriate for upstream communication (from customer premises).

The performance of signal vectoring depends critically on the component values of the precoding or cancellation matrix, which component values are to be computed and updated according to the actual and varying channel couplings. The various channel couplings are estimated by a vectoring controller based on pilot (or probing) signals transmitted over the respective channels. The pilot signals are typically transmitted over dedicated symbols and/or over dedicated tones.

For instance, in the recommendation entitled "*Self-FEXT Cancellation (vectoring) For Use with VDSL2 Transceivers*", ref. G.993.5 (VDSL2 hereinafter), and adopted by the International Telecommunication Union (ITU) in April 2010, the transceiver units send pilot signals on the so-called SYNC symbols. The SYNC symbols occur periodically after every super frame, and are transmitted synchronously over all the vectored lines (super frame alignment). A similar technique has been adopted in G.9701 ITU recommendation (G.fast hereinafter).

Channel estimation can be performed in two ways, sequential or parallel.

With sequential channel estimation one user at a time sends a pilot signal that is detected on the N receivers. Hence, one column of **H** is observed. If the duration of the pilot signals in time is T seconds, then the probing of the full **H** takes at least TN seconds. For accurate estimation, it is desired to observe **H** several times in order to reduce the variance on the measurement results. Observing **H** K times allows to reduce the variation with a factor K. To observe **H** K times, KTN seconds are necessary, which can be prohibitively long for some systems.

With parallel channel estimation, all N users send pilot signals concurrently. These pilot signals should be sent in a sequence of duration K'T, where K' is the length of the pilot sequence modulating the successive pilot symbols, each of duration T. Importantly, the sequence of pilot signals for a given user should be orthogonal to the sequences used by all the other users, which puts a lower bound on the length of the pilot sequence.

In order to achieve the same estimation accuracy (i.e., the same estimate variance) and to make meaningful comparisons, the number of channel observations for parallel estimation, namely K', should match the number of channel observations for sequential estimation, namely K. So is assumed hereinafter: K'= K.

Let $w_i^t$ denote the pilot signals transmitted over line i during pilot symbol t, with i ranging from 1 to N and t from 1 to K. The orthogonality condition for the respective sequences of pilot signals can be written as:

$$\sum_{t=1}^{K} w_i^t (w_j^t)^* = \begin{cases} a > 0, & i = j \\ 0, & i \neq j \end{cases} \quad (2),$$

wherein * denotes the complex conjugate and a denotes some constant.

Such orthogonal sequences can be easily generated by means of Walsh-Hadamard matrices. A Walsh-Hadamard matrix, denoted as **W,** is an orthogonal square matrix, the coefficients of which are either '+1' or '-1'. We thus have **WW**\*=a**I** as per equation (2), wherein * denotes the Hermitian transpose and **I** denotes the identity matrix. The pilot sequences for the different users are then the rows or the columns of **W.**

With orthogonal pilot sequences, a user can estimate the direct and crosstalk channels without interference from the other users.

The received signal $y_i^t$ for line i during symbol t is given by:

$$y_i^t = \sum_{j=1}^{N} h_{ij} w_j^t + z_i^t \quad (3),$$

wherein $z_i^t$ denotes the background noise present over line i during symbol t.

Channel Estimation is done by correlating the received signal on line i with the appropriate pilot sequence:

$$\hat{h}_{ij} = \frac{1}{a} \mathbf{y}_i \mathbf{w}_j^* = \frac{1}{a} \sum_{t=1}^{K} y_i^t (w_j^t)^* = \frac{1}{a} \sum_{t=1}^{K} \left( \sum_{m=1}^{N} h_{im} w_m^t + z_i^t \right) (w_j^t)^* = h_{ij} + \tilde{z}_i \quad (4),$$

wherein the vectors $\mathbf{w}_j$ and $\mathbf{y}_i$ are defined as $\mathbf{w}_j = \{w_j^1 \cdots w_j^K\} \in \mathbb{C}^K$ and $\mathbf{y}_i = \{y_i^1 \cdots y_i^K\} \in \mathbb{C}^K$ , $\tilde{z}_i$ denotes the

background Gaussian noise on line i after correlation and $\hat{h}_{ij}$ denotes an estimate of $h_{ij}$.

With parallel estimation, we observe **H** K times in KT seconds, which compares favorably to sequential channel estimation where K observations require KTN seconds. Parallel channel estimation is usually preferred due to its efficiency and speed.

The advent of new copper access technologies and corresponding use of the high-end of the available spectrum, up to and beyond 100 MHz, poses new challenges. As aforementioned, when communication frequency increases, crosstalk coupling substantially increases too. Consequently, the superimposition of the crosstalk precompensation signals on a victim line may cause a violation of the transmit Power Spectral Density (PSD) mask, which defines the allowed amount of signal power for an individual user as a function of frequency, and may as well result in signal clipping within the analog front end of the transceiver causing severe signal distortions.

A prior art solution is to scale down the gains of the direct signals, and thus of the corresponding precompensation signals, such that the transmit signals, including both the direct and precompensation signals, remain within the allowed bounds. The PSD reduction is line and frequency dependent, and may change over time, e.g. when a line joins or leaves the vectoring group. The change in direct signal gains must be communicated to the respective receivers for proper channel equalization. This first solution has been described in a standard contribution to the International Telecommunication Union (ITU) from Alcatel-Lucent entitled "G.fast: Precoder Gain Scaling", reference ITU-T SG15 Q4a 2013-03-Q4-053, March 2013.

Another prior art solution is the use of Non-Linear Precoding (NLP), which applies modulo arithmetic operation to shift a transmit constellation point with excessive power back within the constellation boundary. At the receiver, the same modulo operation will shift the signal back to its original position.

The idea to employ modulo arithmetic to bound the value of the transmit signal was first introduced by Tomlinson and Harashima independently and nearly simultaneously with application to single-user equalization (M. Tomlinson, "New Automatic Equalizer Employing Modulo Arithmetic" Electronics Letters, 7(5-6), pp.138-139, Mar. 1971; and H. Harashima, and H. Miyakawa, "Matched-Transmission Technique for Channels with Inter Symbol Interference" IEEE Trans. on Communications, 20(4), pp. 774-780, Aug. 1972). Ginis and Cioffi applied the concept to multi-user system for crosstalk cancellation (G. Ginis and J.M. Cioffi, "A Multi-user Precoding Scheme Achieving Crosstalk Cancellation with Application to DSL Systems", Proc. 34Th Asilomar Conference on Signals, Systems and Computers, 2000).

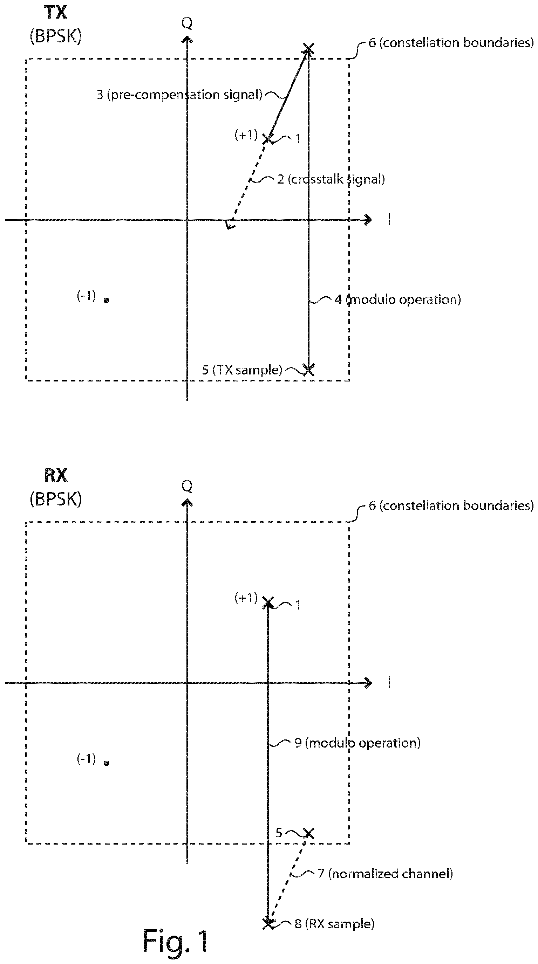

NLP operation is depicted on fig. 1, with as an illustrative example NLP over a BPSK constellation grid as is typically used for modulation of the pilot sequences in VDSL2 and G.fast.

On the top diagram, the original frequency sample 1 to be transmitted over a given line is plotted, along with the overall crosstalk signal 2 incurred over that line and that frequency, and the corresponding precompensation signal 3 for mitigating the induced crosstalk 2. The modulo operation 4 is then applied so that the transmit sample 5 stays within the bounds 6 of the BPSK constellation grid. This happens very often for the high G.fast frequencies, where crosstalk channels are known to be quite strong.

The effect of the normalized channel itself 7, yielding the equalized receive sample 8, and the further modulo operation 9 on the receiver side to recover the initial transmit sample 1 are depicted on the bottom diagram.

It is well-known that NLP provides in general better performance in comparison with Linear Precoding (LP) despite a slight increase in modulation gap and transmit power. However, the channel estimation task for NLP has an inherent problem for the parallel estimation case.

The issue lies precisely with the very nature of NLP. The modulo operation on the transmitter breaks the orthogonality of the pilot sequences. A linear operation on the pilot sequence, such as the multiplication by a precoding matrix, does not affect the orthogonality. A non-linear operation does and thus results in a biased estimation. The mean squared error of this biased estimation does not converge to zero even as the number of observations tends to infinite. What results is a poor channel estimation, which means a less reliable communication path.

As seen above, given a time budget for channel estimation, the parallel case has the potential to be much more efficient and accurate, shortening the training phase of the channel considerably. A large training phase weighs heavily on the initialization time of DSL systems, which is a critical QoS criterion for customers.

A known method for channel estimation avoiding modulo operation is the use of non-precoded SYNC symbols. In this method, the channel matrix **H** is measured instead of the residual channel matrix **HP.** The precoder **P** is then obtained through inversion of **H.** This is an open-loop Zero-Forcing (ZF) method, resulting in a larger estimation error and potential bias. VLADIMIR OKSMAN LANTIQ: "G.fast: Channel estimation method for G.fast;TD2013-01-Q4-039", ITU-T DRAFT, discloses parallel channel estimation using orthogonal pilot sequences not subject to non-linear precoding.

WO 2014/054043 A1 (SCKIPIO TECHNOLOGIES S I LTD [IL]) discloses the usual precoder gain scaling in order to meet PSD requirements.

EP 3 062 471 B1

## Summary of the Invention

It is an object of the present invention to improve estimation of residual inter-channel couplings between communication channels after precoding.

In accordance with a first aspect of the invention, a method is proposed for generating pilot signals for characterization of residual inter-channel couplings between communication channels after non-linear precoding. The method comprises modulating sequences of pilot signals to be concurrently transmitted over the respective communication channels with respective mutually-orthogonal pilot sequences. For respective ones of a sequence of channel probing occurrences, the method further comprises selecting a communication channel out of the communication channels for the respective one channel probing occurrence, scaling a so-modulated pilot signal to be transmitted over the selected communication channel during the respective one channel probing occurrence with a first non-null scaling coefficient, and scaling further so-modulated pilot signals to be transmitted over other non-selected communication channels during the respective one channel probing occurrence with a second non-null scaling coefficient distinct from the first scaling coefficient. The selecting is such that the first scaling coefficient is used exactly once within the respective sequences of so-scaled pilot signals and within the respective channel probing occurrences, and such that the sequences of so-scaled pilot signals are kept mutually-orthogonal. The method further comprises generating sequences of so-scaled pilot signals for transmission over the respective communication channels during the sequence of channel probing occurrences.

In accordance with another aspect of the invention, a pilot signal generator is proposed for characterization of residual inter-channel couplings between communication channels after non-linear precoding. The pilot signal generator is configured to modulate sequences of pilot signals to be concurrently transmitted over the respective communication channels with respective mutually-orthogonal pilot sequences. The pilot signal generator is further configured, for respective ones of a sequence of channel probing occurrences, to select a communication channel out of the communication channels for the respective one channel probing occurrence, to scale a so-modulated pilot signal to be transmitted over the selected communication channel during the respective one channel probing occurrence with a first non-null scaling coefficient, and to scale further so-modulated pilot signals to be transmitted over other non-selected communication channels during the respective one channel probing occurrence with a second non-null scaling coefficient distinct from the first scaling coefficient. The selecting is such that the first scaling coefficient is used exactly once within the respective sequences of so-scaled pilot signals and within the respective channel probing occurrences, and such that the sequences of so-scaled pilot signals are kept mutually-orthogonal. The pilot signal generator is further configured to generate sequences of so-scaled pilot signals for transmission over the respective communication channels during the sequence of channel probing occurrences.

Such a pilot generator typically forms part of an access node providing broadband communication services to subscribers over respective subscriber lines, and deployed at a CO or at a remote location closer to subscriber premises.

In accordance with still another aspect of the invention, a method is proposed for characterization of residual inter-channel couplings between communication channels after non-linear precoding. The method comprises generating pilot signals as per the above method, gathering sequences of interference measurements carried out over the respective communication channels during respective ones of the sequence of channel probing occurrences, correlating the sequences of interference measurements with respective ones of the sequences of so-scaled pilot signals, and characterizing the residual inter-channel couplings between the communication channels from the correlation.

In one embodiment of the invention, values for the first and second scaling coefficients are obtained from estimates of nominal inter-channel couplings between the communication channels.

In one embodiment of the invention, the estimates of the nominal inter-channel couplings are obtained by means of unprecoded pilot signals transmitted over the respective communication channels.

In one embodiment of the invention, the values of the first and second scaling coefficients are optimized in order to maximize the transmit power or amplitude of the so-scaled pilot signals while confining the so-scaled pilot signals within pre-determined signal bounds designed to avoid modulo operation on the so-scaled pilot signals.

In one embodiment of the invention, frequency samples of the sequences of so-scaled pilot signals can be written in matrix-form as:

$$W = \begin{bmatrix} \pm G & \pm e & \pm e & \pm e \\ \pm e & \pm G & & \vdots \\ \pm e & & \ddots & \\ \pm e & \dots & & \pm G \end{bmatrix} z \ ,$$

or as any permutation of the columns and/or rows thereof, or as any sign flip of the columns and/or rows thereof, G and e denoting the first and second scaling coefficients respectively, and z denoting a reference complex constellation point.

In one embodiment of the invention, the matrix **W** is generated by means of an iterative algorithm starting with

$$\mathbf{W}_i = \begin{bmatrix} \mathbf{W}_{i-1} & \mathbf{W}_{i-1} \\ -\mathbf{W}_{i-1}^\tau & \mathbf{W}_{i-1}^\tau \end{bmatrix},$$

initial matrix $\mathbf{W}_0 = [e]z$ and iterative relationship the superscript $\tau$ denoting the matrix transpose, and next by substituting G for the diagonal elements of the so-generated matrix $\mathbf{W}_i$.

In one embodiment of the invention, the sequences of so-scaled pilot signals are stored in a local data repository for further characterization of the residual inter-channel couplings between the communication channels.

In one embodiment, the characterization of the residual inter-channel couplings obtained by means of the so-scaled pilot signals is compared with a further characterization of the residual inter-channel couplings obtained by means of mutually orthogonal and unscaled pilot signals, and an appropriate characterization is selected based on a mean squared error criterion.

A new type of orthogonal matrices is proposed that extends the Walsh-Hadamard formalism by allowing two coefficient magnitude values instead of one. With this adaptation, parallel estimation can be used to track the residual channel **HP,** meaning a speedier response time to changes in the channel and a more reliable estimation.

This new type of orthogonal matrix, further referred to as generalized Walsh-Hadamard matrices, is built from two scalar values G and e. The G's and e's are distributed such that each row and each column of the generalized walsh-Hadamard matrix contains a single G only. A generalized Walsh-Hadamard matrix **W** thus looks like:

$$\mathbf{W} = \begin{bmatrix} \pm G & \pm e & \pm e & \pm e \\ \pm e & \pm G & & \vdots \\ \pm e & & \ddots & \\ \pm e & \dots & & \pm G \end{bmatrix}.$$

The signs of the matrix coefficients are chosen such that the rows and the columns are mutually orthogonal. Any permutation of the rows and/or columns of **W,** as well as any sign flip of the rows and/or columns of **W,** is still a valid generalized Walsh-Hadamard matrix as the rows and columns remains mutually orthogonal.

Typically, G and e are real or complex scalars whose magnitude is strictly lower than one. The case G = e = 1 (that is to say the pilot signals are left unchanged without any down/up-scaling) corresponds to parallel channel estimation using typical unscaled orthogonal pilot sequence, such as walsh-Hadamard sequences. The case G = 1 and e = 0 (that is to say no pilot signal is sent over the lines but one) corresponds to sequential channel estimation.

The choice of the concrete values for G and e represents a natural way to trade-off between sequential estimation and parallel estimation. Optimal values for G and e are determined by solving an optimization problem. The constraints of the optimization problem guarantee that the pre-compensated signals stay within the modulo bounds, and hence that there will be no or very few modulo operation on the pilot signals that may affect their orthogonality.

Such generalized walsh-Hadamard matrices may have wider application beyond NLP.

**Brief Description of the Drawings**

The above and other objects and features of the invention will become more apparent and the invention itself will be best understood by referring to the following description of an embodiment taken in conjunction with the accompanying drawings wherein:

- fig. 1 represents NLP operation for a BPSK constellation as previously discussed;
- fig. 2 represents an overview of an access plant;
- fig. 3 represents a functional overview of NLP in a communication system;
- fig. 4 represents sequences of pilot signals scaled as per the present invention;
- fig. 5 represents a plot of an optimization problem involving both e and G; and
- fig. 6 represents an access node as per the present invention coupled to respective Customer Premises Equipment (CPE).

**Detailed Description of the Invention**

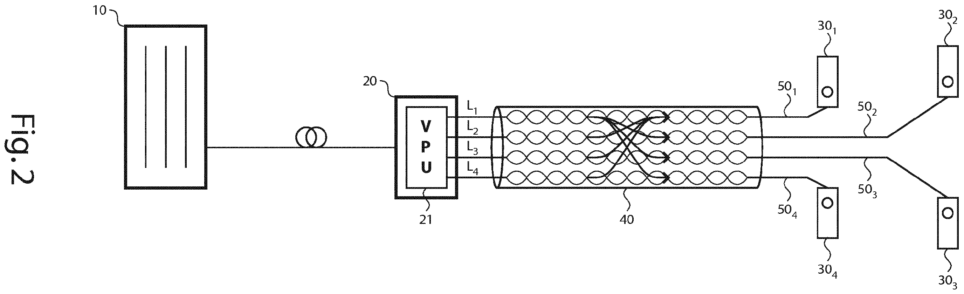

There is seen in fig. 2 an access plant comprising a network unit 10 at a CO, an access node 20 coupled via one or more optical fibers to the network unit 10, and further coupled via a copper loop plant to CPEs 30 at various customer locations. The transmission media of the copper loop plant is typically composed of copper Unshielded Twisted Pairs (UTP).

As an illustrative example, the loop plant comprises four subscriber lines $L_1$ to $L_4$ sharing a common access segment 40, and then going through dedicated loop segments 50 for final connection to CPEs $30_1$ to $30_4$ respectively.

Within the common access segment 40, the subscriber lines $L_1$ to $L_4$ are in close vicinity with each other and thus induce crosstalk into each other (see the arrows in fig. 1 between the respective subscriber lines).

The access node 20 comprises a vectoring Processing Unit 21 (or VPU) for jointly processing the data symbols that are being transmitted over, or received from, the loop plant in order to mitigate the incurred crosstalk and to increase the communication data rates achievable over the respective subscriber lines. The VPU 21 implements NLP in order to enhance the downstream vectoring gains in the presence of strong crosstalk.

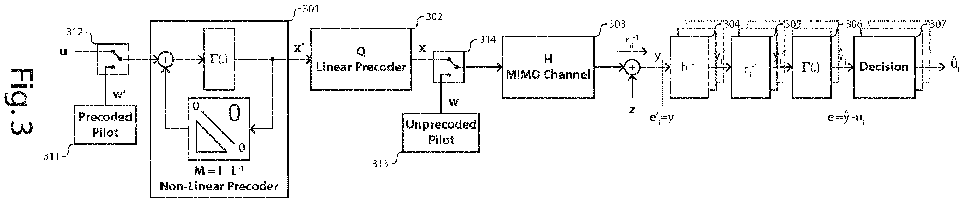

There is seen in fig. 3 a functional overview of NLP in a communication system.

The non-linear precoder is constructed using the so-called **QR** matrix decomposition. A good overview of the technique, with step-by-step description of the functions is given in the ITU contribution entitled "G.fast: Comparison of Linear and Non-Linear Pre-coding for G.fast on 100m BT Cable" from S. Singh and M. Sorbara, ref. SG15 2013-01-Q4-031, January 2013.

More formally, the channel matrix **H** is first written as:

$$\mathbf{H} = \mathbf{DG} \quad (5),$$

wherein the carrier index k has been voluntarily omitted, **D** is a diagonal matrix comprising the direct channel coefficients $h_{ii}$, and **G** is the normalized channel matrix with unit diagonal.

Ideal ZF linear precoding is achieved when the precoding matrix **P** implements the inverse of the normalized channel matrix, namely:

$$\mathbf{P} = \mathbf{G}^{-1} \quad (6),$$

such that **H.P = D,** the latter being compensated by single-tap Frequency EQualization (FEQ) at the receivers.

With linear ZF precoding, the noise at the receiver input is enhanced by the direct channel frequency response by a factor $1/h_{i,i}$. We also note that the noise is evenly enhanced for identical lines as they are all expected to have an almost equal path loss $h_{i,i}$.

With non-linear precoding, the conjugate transpose of the normalized channel matrix is first factored into two matrices, namely:

$$\mathbf{G}^{*} = \mathbf{QR} \quad (7),$$

wherein **R** is an N×N upper triangular matrix, and **Q** is a NxN unitary matrix (i.e., **Q*Q = I**).

One diagonalizing precoding matrix is then given by:

$$\mathbf{P} = \mathbf{QR}^{*-1} \quad (8),$$

yielding **HP = DGQR*-1 = DR*Q*QR*-1 = D.**

Let us write:

$$\mathbf{L} = \mathbf{R}^{*-1}\mathbf{S} \quad (9),$$

wherein **L** is a NxN lower triangular matrix with unit diagonal, and **S** is a N×N normalization diagonal matrix whose elements are the diagonal elements of **R***.

The diagonal matrix **S** indicates a per-line precoding gain that depends on the encoding order. **S** scaling is to be disposed of as it would adversely affect the power of the direct signals and thus the achievable bit rates, thereby yielding **P = QL** and **HP = DGQL = DR*Q*QR*-1S = DS.** A further equalization step **S**-1 is thus required at the receivers to recover the initial transmit samples. The gain scaling matrix **S** is determined from the **QR** matrix decomposition, and its coefficient $r_{ii}^{-1}$ are sent to the respective receivers for proper signal equalization.

Ideal ZF NLP is thus achieved with a first feedforward filter **L**, or equivalently with a first feedback filter **M = I** -

$\mathbf{L}^{-1} = \mathbf{I} - \mathbf{S}^{-1}\mathbf{R}^*$, followed by a second feedforward filter $\mathbf{Q}$. The feedback structure allows the feeding of the output samples after modulo operation back to the filter's input, while the triangular structure of the matrix $\mathbf{M}$ in the feedback loop guarantees that the modulo output for user i serves as input for users j encoded later (j>i) but does not affect the output of users k encoded earlier (k<i).

Hence, in a first step, each element i of a transmit vector $\mathbf{u}$ is added row by row to the $i^{th}$ output of the feedback filter $\mathbf{M}$, which is a function of the previous i-1 outputs only, but before proceeding to the next row, the output for element i is adapted through a modulo operation, thereby keeping the transmit power within the allowed bounds. In a second step, the resulting vector is multiplied with the matrix $\mathbf{Q}$, which preserves the initial transmit power on account of its unitary property.

Thus, the modulo unit outputs a signal $\mathbf{x'}$ given by:

$$\begin{aligned}
x_1' &= \Gamma_{1,k}\left(u_1\right) = u_1 \\
x_2' &= \Gamma_{2,k}\left(u_2 + m_{21}x_1'\right) = \Gamma_{2,k}\left(u_2 - \frac{r_{21}}{r_{22}}x_1'\right) \\
&\vdots \\
x_N' &= \Gamma_{N,k}\left(u_N + m_{NN-1}x_{N-1}' + \cdots + m_{N1}x_1'\right) = \Gamma_{N,k}\left(u_N - \frac{r_{NN-1}}{r_{NN}}x_{N-1}' - \cdots - \frac{r_{N1}}{r_{NN}}x_1'\right)
\end{aligned} \quad (10),$$

wherein $u_i$, $x_i'$, mij and $r_{ij}$ denote the coefficients of $\mathbf{u}$, $\mathbf{x'}$, $\mathbf{M}$ and $\mathbf{R}^*$ respectively, and wherein $\Gamma_{i,k}$ denotes the modulo operator as a function of the constellation size for carrier k and user i.

The modulo operator $\Gamma_{i,k}$ is given by:

$$\Gamma_{i,k}\left(x_{i,k}\right) = x_{i,k} - d \cdot M_{i,k}\left\lfloor \frac{x_{i,k} + d \cdot M_{i,k}/2}{d \cdot M_{i,k}} \right\rfloor \quad (11),$$

wherein xi,k denotes some arbitrary transmit frequency sample for carrier k and user i, Mi,k denotes the number of constellation points per I/Q dimension for carrier k and user i, and d denotes the distance between neighboring constellation points in the one dimension.

At the receiver, the equalized receive signal samples $\mathbf{y'}$ are given by:

$$y_i' = r_{ii}\Gamma_{i,k}\left(u_i - \sum_{j=1}^{i-1} \frac{r_{ij}}{r_{ii}}x_j'\right) + \sum_{j=1}^{i-1} r_{ij}x_j' + z_i \quad (12).$$

A further equalization step $\mathbf{S}^{-1}$ together with a further modulo operation is then needed to recover the initial transmit vector $\mathbf{U}$:

$$\hat{y}_i = \Gamma_{i,k}\left(\frac{y_i'}{r_{ii}}\right) = \Gamma_{i,k}\left(\Gamma_{i,k}\left(u_i - \sum_{j=1}^{i-1} \frac{r_{ij}}{r_{ii}}x_j'\right) + \sum_{j=1}^{i-1} \frac{r_{ij}}{r_{ii}}x_j' + \frac{z_i}{r_{ii}}\right) = \Gamma_{i,k}\left(u_i + \frac{z_i}{r_{ii}}\right) \quad (13).$$

The term $u_i + \dfrac{z_i}{r_{ii}}$ is expected to be within the constellation boundaries and thus $\Gamma_{i,k}\left(u_i + \dfrac{z_i}{r_{ii}}\right)$ should reduce to $u_i + \dfrac{z_i}{r_{ii}}$. The decision $\hat{u}_i$ is then made on that sample.

We note that the noise at the receiver is enhanced by a factor of $1/r_{ii}$. We also note that for a cable with identical lines, the diagonal values of the $\mathbf{R}^*$ matrix do not have the same value; hence the noise enhancement is not the same on each line, which may lead to an unfair distribution of bit rates to the different users depending on the level of crosstalk couplings and the precoding order.

The overall processing and transmission chain is depicted on fig. 3.

The first non-linear precoding stage 301 uses the modulo function $\Gamma$, and a first lower-triangular precoding matrix **M** in the feedback loop. The matrix **M** is given by $\mathbf{M} = \mathbf{I} - \mathbf{L}^{-1} = \mathbf{I} - \mathbf{S}^{-1}\mathbf{R}^*$, and has zero coefficients along its diagonal. The first precoding stage 301 implements non-linear precoding as per equations (10) and (11), and outputs a partially-precoded vector **x'** towards the second linear precoding stage 302.

The second linear precoding stage 302 uses a second unitary or almost-unitary matrix **Q,** and outputs a fully-precoded vector **x** for further transmission over the MIMO channel 303.

The MIMO channel 303 is assumed to encompass not only the transmission medium, but also the analog front end circuitries at both the transmit and receive sides. The MIMO channel 303 is assumed to be linear and is represented by a channel matrix $\mathbf{H} = \mathbf{DG} = \mathbf{DR}^*\mathbf{Q}^*$.

The vector **y** comprises the frequency samples $y_i$ received through the respective communication channels and corrupted by some additive white Gaussian noise **z.**

Focusing on a particular receiver, the receive sample $y_i$ goes through the equalization stages 304 and 305. The equalization stage 304 uses the diagonal coefficient $h_{ii}^{-1}$ of the diagonal matrix $\mathbf{D}^{-1}$, while the equalization stage 305 uses the diagonal coefficient $r_{ii}^{-1}$ of the diagonal matrix $\mathbf{S}^{-1}$. The first equalizing coefficient $h_{ii}^{-1}$ is typically estimated by the receiver during line initialization (e.g., the so-called channel analysis and exchange phase during VDSL2 or G.fast initialization), while the second equalization coefficient $r_{ii}^{-1}$ is received from the access node. The equalization stages 304 and 305 can be merged into one single equalization stage $\mathbf{S}^{-1}\mathbf{D}^{-1}$.

The properly equalized frequency sample $y_i''$ goes through the modulo function $\Gamma$ 306 to yield a possibly-modified frequency sample $\hat{y}_i$ for detection by the decision stage 307. The decision stage 307 outputs an estimate $\hat{u}_i$ of the transmit sample $u_i$.

A pilot generator 311 generates sequences of pilot vectors **w'** scaled as per the present invention. The pilot vectors **w'** are pre-processed through the first and second precoding stages 301 and 302 before transmission over the respective channels 303 during dedicated symbol positions that have been reserved for channel probing (e.g., SYNC symbols in VDSL2 and G.fast).

The pilot generator 311 is coupled to the input of the non-linear precoding stage 301 through a switch 312, which selects either between a transmit vector **u** or the pilot vector **w'** generated by the pilot generator 311 depending on the data symbol position (e.g., **w'** for SYNC symbols and **u** for DATA symbols).

The pilot vectors **w'** are used for estimating the residual channel matrix **HP** or the normalized residual channel matrix **GP,** and further to refine the precoding coefficient values used by the first and/or second precoding stages 301 and 302 so as to drive the residual crosstalk down to zero.

A further pilot generator 313 generates sequences of unprecoded pilot vectors **w** for direct transmission over the respective channels 303. These pilot sequences do not need to be scaled as there are no pre-compensation signals and thus no modulo operation. For example, typical walsh-Hadamard sequences can be used to generate the sequences of pilot vectors **w.**

The pilot generator 313 is coupled to the input of the MIMO channel 303 through a switch 314, which selects either between a fully-precoded vector **x** or the pilot vector **w** generated by the pilot generator 313.

The pilot vectors **w** are used for getting an initial estimate of the channel matrix **H** or of the normalized channel matrix **G**.

Channel estimation is based on signal measurements performed by the receivers. Two signal measurement points are defined.

The first measurement point $e'_i$ measures the signal $y_i$ as received from the MIMO channel 303 on a per carrier basis and without any equalization being performed. This first measurement point is used to estimate the channel matrix **H** or the residual channel matrix $\mathbf{HP} = \mathbf{HQL}$.

The second measurement point $e_i$ measures the slicer error on a per carrier basis, that is to say the difference between the equalized frequency sample $y''_i$ and the transmit sample $u_i$ or the detected transmit sample $\hat{u}_i$. The second measurement point $e_i$ is used to estimate the normalized channel matrix **G** or the normalized residual channel matrix $\mathbf{GP} = \mathbf{GQL}$. The second measurement point $e_i$ can also be used by the transmitter to determine appropriate bit loading values for the respective carriers.

Measurement samples are typically encoded by means of the floating point representation. This representation allows to keep the quantification noise at a constant level relative to the signal amplitude, which is especially helpful for the second measurement point $e_i$ as the slicer error gets smaller and smaller while the crosstalk is more and more canceled. This is not valid for the first measurement point $e'_i$ as the signal amplitude is primarily determined by the power of the receive signal $y_i$, and thus the quantification noise increases as the crosstalk gets smaller.

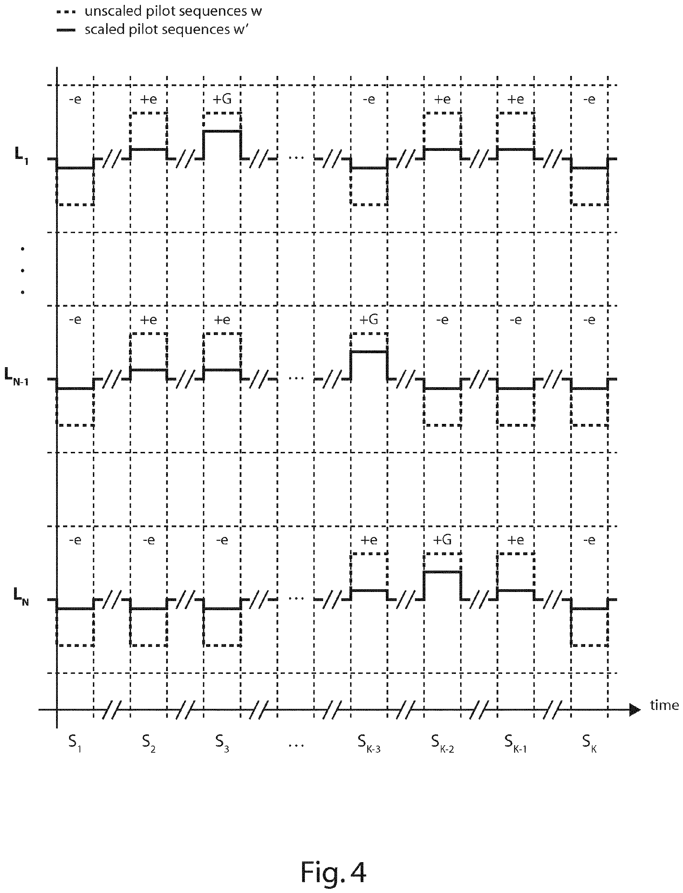

There is seen in fig. 4 an exemplary illustration of the successive pilot vectors **w** and **w'** that modulate the pilot carriers over the respective communication channels during successive channel probing occurrences.

There is assumed a vectoring group comprising N subscriber lines, namely $L_1$ to $L_N$, performing as the MIMO channel 303. Let K denote the length of the pilot sequences, and let $S_1$ to $S_K$ denote the K channel probing occurrences (e.g., K successive SYNC symbols for VDSL2 and G.fast).

Let $w_i^t(k)$ and $w'_i^t(k)$ denote the unscaled ($\pm 1$) or scaled ($\pm G$; $\pm e$) individual pilot values (or digits) that modulate a given pilot carrier k over a given subscriber line $L_i$ during a given probing occurrence t.

Let $\mathbf{w}_i = \{w_i^t(k)\}_{t=1..K}$ and $\mathbf{w'}_i = \{w'_i^t(k)\}_{t=1..K}$ (subscript i) respectively denote the unscaled and scaled pilot row-vectors used over a particular subscriber line $L_i$ during the K successive probing occurrences $S_1$ to SK.

Similarly, let $\mathbf{w}^t = \{w_i^t(k)\}_{i=1..N}$ and $\mathbf{w'}^t = \{w'_i^t(k)\}_{i=1..N}$ (superscript t) respectively denote the unscaled and scaled pilot column-vectors used over the subscriber lines $L_1$ to $L_N$ during a particular probing occurrence St.

The unscaled and scaled pilot sequences can thus be represented in matrix form as NxK rectangular matrices **W** and **W'** respectively given by:

$$\mathbf{W} = [\mathbf{w}^1; \mathbf{w}^2; \ldots; \mathbf{w}^K] = [\mathbf{w}_1; \mathbf{w}_2; \ldots; \mathbf{w}_N]^T,$$

and

$$\mathbf{W'} = [\mathbf{w'}^1; \mathbf{w'}^2; \ldots; \mathbf{w'}^K] = [\mathbf{w'}_1; \mathbf{w'}_2; \ldots; \mathbf{w'}_N]^T.$$

The pilot sequences transmitted over the respective subscriber lines $L_i$ are mutually orthogonal, or equivalently:

$$\mathbf{WW}^T = a\mathbf{I} \text{ and } \mathbf{W'W'}^T = a'\mathbf{I} \ (14),$$

wherein a and a' denote two constants.

The length K of the pilot sequences shall be strictly greater than the number of vectored lines in order to fulfill the orthogonality requirement (excluding the constant pilot sequence). If less lines are targeted for crosstalk estimation, then K and thus the crosstalk acquisition time can be reduced accordingly.

The channel probing occurrences $S_1$ and $S_K$ are typically time-interleaved with regular data symbols conveying payload traffic (e.g., 1 SYNC symbol is followed by 256 DATA symbols in VDSL2). The probing occurrences are aligned in time (e.g., super-frame alignment in VDSL2 and G.fast), and thus the pilot signals are sent simultaneously over the respective subscriber lines $L_1$ to $L_N$.

The dashed lines in fig. 4 correspond to the unscaled pilot sequences $\mathbf{w}_i$, such as the typical walsh-Hadamard sequences. The unscaled pilot sequences $\mathbf{w}_i$ toggles between two pilot values '+1' and '-1'. The pilot values modulate the pilot carriers by multiplication of the respective pilot values with a reference constellation point z. if BPSK is used, then z is typically equal to '1+j'.

The solid lines corresponds to the pilot sequences $\mathbf{w'}_i$ scaled as per the present invention. The initial pilot values '+1' or '-1' are either scaled with a first scaling coefficient G, thereby yielding '+G' or '-G', or with a second coefficient scaling coefficient e, which is different from G, thereby yielding two additional values '+e' and '-e'. The selection of which scaling coefficient to apply to which pilot value and to which subscriber line is not arbitrary but shall obey some constraints.

For each of the successive channel probing occurrence $S_1$ to $S_K$, one particular subscriber line is selected whose pilot signal is scaled with the first scaling coefficient G (e.g., line $L_1$ for channel probing occurrence $S_3$), while the pilot signals sent over all the other lines are scaled with the second scaling coefficient e (e.g., the remaining lines $L_2$ to $L_N$ for channel probing occurrence S3). Equivalently, each of the pilot column-vectors $\mathbf{w'}^t$ has one of its coefficients set to '$\pm G$', while the other remaining coefficients are set to '$\pm e$', wherein $\pm$ stands for '+' or '-'.

Also, for each of the pilot sequences $\mathbf{w'}_1$ to $\mathbf{w'}_N$ sent over the subscriber lines $L_1$ to $L_N$, one particular channel probing occurrence is selected during which the pilot signal is scaled with the first scaling coefficient G (e.g., channel probing occurrence $S_{K-2}$ for line $L_N$), while the pilot signals sent during all the other channel probing occurrences are scaled with the second scaling coefficient e (e.g., the remaining channel probing occurrences $S_1$ to $S_K$.3 and $S_{K-1}$ to $S_K$ for line $L_N$). Equivalently, each of the pilot row-vectors $\mathbf{w'}_i$ has one of its coefficients set to '$\pm G$', while the other remaining coefficients are set to '$\pm e$'.

Furthermore, these selections shall be such that the rows and columns of the resulting matrix **W'** are mutually orthogonal, or equivalently $\mathbf{W'W'}^T = a'\mathbf{I}$

Thus the matrix **W'** will look like the following:

$$W' = \begin{bmatrix} \pm G & \pm e & \pm e & \pm e \\ \pm e & \pm G & & \vdots \\ \pm e & & \ddots & \\ \pm e & \cdots & & \pm G \end{bmatrix},$$

including any permutation of the columns and/or rows thereof, and/or any sign flip of the columns and/or rows thereof.

The pilot matrix **W'** can be generated by means of the following pseudo-coded algorithm:

- $W'_1 = [e]$,
- for $i = 2$ to $M = \lceil \log_2(K) \rceil$ :

$$W'_i = \begin{bmatrix} W'_{i-1} & W'_{i-1} \\ -W'^{T}_{i-1} & W'^{T}_{i-1} \end{bmatrix},$$

- substitute G for the diagonal elements of $W'_M$.

It can be proven that the $2^M \times 2^M$ resulting matrix $W'_M$ satisfies the orthogonality condition. Although the algorithm somewhat resembles the algorithm for the generation of the Walsh-Hadamard matrices, it is considerably different. Also, by construction, the algorithm ensures that only the diagonal coefficients of $W'_M$ are equal to '$\pm G$' and all the off-diagonal coefficients are equal to '$\pm e$', meaning there will be only one coefficient per row (i.e., per subscriber line) and per column (i.e., per channel probing occurrence) equal to '$\pm G$'. Also, any permutation of the rows and/or columns of $W'_M$, and/or any sign flip of the rows and/or columns of $W'_M$, still yields a valid pilot matrix.

Next, the values for the scaling coefficients G and e need to be precisely determined. The determination of these values should strike a balance between two conflicting features. One the one hand, these values should be as large as possible. The larger they are, the more available power for accurate channel estimation. On the other hand, they should be chosen so as to avoid modulo operations on the transmit signals as it would break the orthogonality of the pilots. Note that the power of the precompensation signals is directly related to the values of G and e.

With this in mind, the following optimization problem is defined:

$$\max_{e,G} \quad G^2 + (N-1)e^2$$

*subject to:*

$$-2 \leq \mathrm{real}(LW') \leq 2$$

$$-2 \leq \mathrm{im}(LW') \leq 2$$

$$0 \leq e \leq 1$$

$$0 \leq G \leq 1$$

Here $G^2 + (N-1)e^2$ is the available power for estimation. It is easy to show that:

$$W'W'^{T} = a'I = (G^2 + (N-1)e^2)I \quad (15).$$

The first two constraints assure that the pre-compensated signal stay within bounds. The bounds are set to the bounds of the classical 4-QAM constellation with symbols on $\pm 1 \pm j$, i.e. the bounds are equal to 2. The precoding matrix **L** shall be preliminary known and input to the optimization algorithm.

This optimization problem is NP-hard, which makes it computationally difficult to solve. Given that each of the constraints can be written as a linear equation, we can approximate the problem as:

$$\max_{e,G} \; G+(N-1)e$$

*subject to:*

$$-2 \le real(\mathbf{LW'}) \le 2$$

$$-2 \le im(\mathbf{LW'}) \le 2$$

$$0 \le e \le 1$$

$$0 \le G \le 1$$

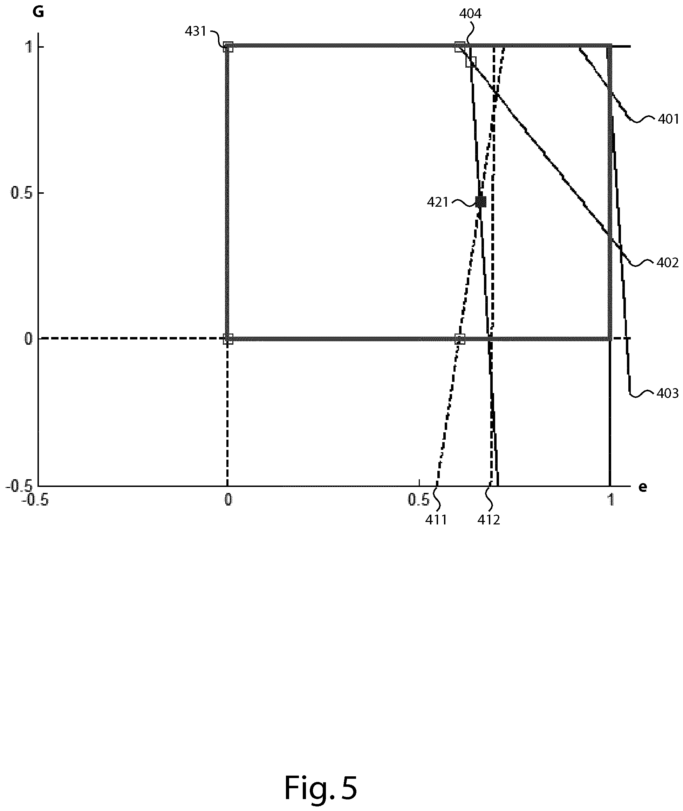

A visualization of this second optimization is shown in fig. 5. The magnitude of e is plotted on the horizontal axis and the magnitude of G is plotted on the vertical axis. G and e shall be located within the square 431 for their magnitude to be lower than one. Each of the lines represent a constraint. The solid lines 401 to 404 are upper bounds, i.e. the region below these lines is feasible. The dashed lines 411 and 412 are lower bounds, i.e. the region above these lines is feasible. The point 421 is found to be the optimal point.

It is instructive to write the scaled pilot matrix **W'** as:

$$\mathbf{W'}= s\mathbf{I} + p\mathbf{U} \quad (16)$$

wherein s and p are scalars, and **U** is a unitary square matrix of size $2^M$ generated as:

$$\mathbf{U}_1 =[1],$$

and

$$\mathbf{U}_i=\frac{1}{\sqrt{2}}\begin{bmatrix} \mathbf{U}_{i-1} & \mathbf{U}_{i-1} \\ -\mathbf{U}_{i-1}^{\mathsf{T}} & \mathbf{U}_{i-1}^{\mathsf{T}} \end{bmatrix} .$$

One can note that **W'** is unitary with proper selection of s and p. Indeed, since $(\mathbf{U}_M+\mathbf{U}_M{}^*) = 2.2^{-(M/2)} = 2/\sqrt{K}$, we have:

$$(s\mathbf{I}+p\mathbf{U})(s\mathbf{I}+p\mathbf{U})^*=(s^2+p^2+\frac{2sp}{\sqrt{K}})\mathbf{I} \quad (17).$$

Hence W' is unitary as long as:

$$(s^2+p^2+\frac{2sp}{\sqrt{K}})=1 \quad (18).$$

The relative magnitudes of s and p is the degree in which the estimation is sequential or parallel respectively.

With s = 0 and p = 1, one obtains parallel estimation. With s = 1 and p = 0, one obtains sequential estimation.

One can now choose the magnitude and size of p and s subject to the constraints above. In this optimization, **W'** does not need to be unitary. It is sufficient that all rows are orthogonal to each other.

The term $\left(s^2 + p^2 + \dfrac{2\,sp}{\sqrt{K}}\right)$ denotes the average transmit power of the pilot sequence, and should be maximized to minimize estimation error. The parameters s and p are coupled through a term that is inversely proportional to the size of the vectoring group.

A simple heuristic that meets the constraint is to choose the magnitudes of s and p as:

$$s \;=\; 1/\max|\mathbf{L}_{R/I}| \quad (19),$$

$$p \;=\; 1/\max|\mathbf{L}_{R/I}\mathbf{U}| \quad (20),$$

wherein $\mathbf{L}_{R/I}$ denotes that the maximization is over the real or imaginary components of **L** separately.

So far, obtaining s and p requires one division and no multiplication (calculating **LU** requires only sign changes and additions). We can stop the optimization here, or we can further increase either one component (e.g., to privilege parallel estimation) or both components through a scalar value until the constraint '< 2' is met.

More elaborate heuristic would co-optimize s and p by looking at the minimum and maximum values in each row of $\mathbf{L}_{R/I}$ and $\mathbf{L}_{R/I}\mathbf{U}$, and obtaining a set of equations with two unknowns, namely s and p.

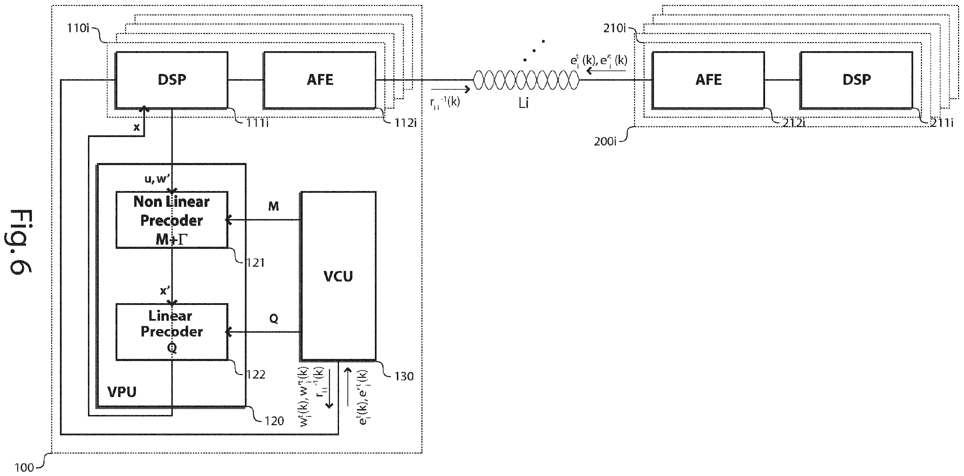

There is seen in fig. 6 further details about an access node and respective CPEs.

An access node 100 comprises:

- transceivers 110;
- a Vectoring Processing Unit (VPU) 120; and
- a vectoring Control Unit (VCU) 130 for controlling the operation of the VPU 120.

The transceivers 110 are individually coupled to the VPU 120 and to the VCU 130. The VCU 130 is further coupled to the VPU 120.

The transceivers 110 individually comprise:

- a Digital Signal Processor (DSP) 111; and
- an Analog Front End (AFE) 112.

The access node 100 is coupled to CPEs 200 through respective subscriber lines $L_i$, which are assumed to form part of the same vectoring group.

The CPE 200 comprises respective transceivers 210 individually comprising:

- a Digital Signal Processor (DSP) 211; and
- an Analog Front End (AFE) 212.

The AFEs 112 and 212 individually comprise a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the transmission line, and a Low Noise Amplifier (LNA) for amplifying the receive signal with as little noise as possible.

In case of Frequency Division Duplexing (FDD) operation where downstream and upstream communications operate simultaneously over the same transmission medium in distinct and non-overlapping frequency bands, the AFEs 112 and 212 further comprise a hybrid for coupling the transmitter output to the transmission medium and the transmission medium to the receiver input while achieving low transmitter-receiver coupling ratio. The AFE may further accommodate echo cancellation filters to reduce the coupling ratio at a further extent.

In case of Time Duplexing Division (TDD) operation where downstream and upstream communications operate over the same frequency band but in distinct and non-overlapping time slots, the hybrid can be advantageously omitted as the transmitter and receiver operate in alternate mode: the receive circuitry is switched OFF (or the receive signal is discarded) while the transmit circuitry is active, and the way around, the transmit circuitry is switched OFF while the receive circuitry is active.

The AFEs 112 and 212 further comprise impedance-matching circuitry for adapting to the characteristic impedance of the transmission medium, clipping circuitry for clipping any voltage or current surge occurring over the transmission medium, and isolation circuitry (typically a transformer) for DC-isolating the transceiver from the transmission medium.

The DSPs 111 and 211 are configured to operate downstream and upstream communication channels for conveying user traffic over a transmission medium. The transmission medium can be of any type, including one or more Unshielded Twisted Pairs (UTP), a co-axial cable, a power line, etc.

The DSPs 111 and 211 are further configured to operate downstream and upstream control channels that are used to transport control traffic, such as diagnosis, management or On-Line Reconfiguration (OLR) commands and responses. Control traffic is multiplexed with user traffic over the transmission medium.

More specifically, the DSPs 111 and 211 are for encoding and modulating user and control data into digital data symbols, and for de-modulating and decoding user and control data from digital data symbols.

The following transmit steps are typically performed within the DSPs 111 and 211:

- data encoding, such as data multiplexing, framing, scrambling, error correction encoding and interleaving;
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis coding;
- signal scaling, including scaling of the pilot signals as per the present invention and some further signal scaling if any, such as transmit PSD shaping;
- Inverse Fast Fourier Transform (IFFT);
- Cyclic Prefix (CP) insertion; and possibly
- time-windowing.

The following receive steps are typically performed within the DSPs 111 and 211:

- CP removal, and possibly time-windowing;
- Fast Fourier Transform (FFT);
- Frequency EQualization (FEQ);
- signal de-modulation and detection, comprising the steps of applying to each and every equalized frequency sample an appropriate constellation grid, the pattern of which depends on the respective carrier bit loading, detecting the expected transmit constellation point and the corresponding transmit bit sequence, possibly with Trellis decoding, and re-ordering all the detected chunks of bits according to the carrier ordering table; and
- data decoding, such as data de-interleaving, error correction, de-scrambling, frame delineation and de-multiplexing.

Some of these transmit or receive steps can be omitted, or some additional steps can be present, depending on the exact digital communication technology being used.

The DSPs 111 generate the respective components of the successive pilot vectors **w** and **w'**, and thus act as the pilot generators 311 and 313 and corresponding switches 312 and 314 in fig. 3.

The DSPs 111 are configured by the VCU 130 with the respective pilot sequences $\mathbf{w}_i$ or $\mathbf{w'}_i$ to use for modulation of the pilot carriers (see $w_i^t(k)$ and $w'^t_i(k)$ in fig. 6). The pilot signals are conveyed over dedicated symbol positions, such as the SYNC symbols, and/or over dedicated set of carriers (probing carriers).

The VPU 120 is for jointly processing the components of the transmit vector **u** or the scaled pilot vector **w'** in order to pre-compensate an estimate of the coming crosstalk. The VPU 120 comprises a first non-linear precoding stage 121 serially coupled to a second linear precoding stage 122.

The first precoding stage 121 is configured to process the transmit vector **u** or the scaled pilot vector **w'** through a feedback filter **M = L-I** and a modulo function $\Gamma$ as per equations (10) and (11), and yields the partially-precoded transmit vector **x'**.

The second precoding stage 122 is configured to process the partially-precoded transmit vector **x'** by multiplication with a second unitary or almost unitary matrix **Q**, and yields the fully-precoded transmit vector **x**.

The fully-precoded transmit vector **x** is returned to the DSP 111 for Inverse Fast Fourier Transform (IFFT) and further transmission over the respective subscriber lines.

The unscaled pilot vector **w** are not input to the VPU 120 but are directly input unprecoded to the IFFT.

The VPU 120 may further comprise a postcoder for canceling the crosstalk from the upstream receive signals. The corresponding blocks have been purposely omitted in fig. 6.

The VCU 130 is for initializing or updating the precoding matrices **M** and **Q** that are used by the first precoding stage 121 and the second precoding stage 122 respectively.

The VCU 130 first configures the transceivers $110_i$ with the respective unscaled pilot sequences $\mathbf{w}_i$ or with the respective scaled pilot sequences $\mathbf{w'}_i$.

The configured pilot sequences $\mathbf{w}_i$ or $\mathbf{w'}_i$ can further be sent to the respective transceivers $210_i$ for avoidance of demapping errors during measurement of the slicer errors $e_i$ (frequent in high crosstalk environment).

Regarding the unscaled pilot sequences $\mathbf{w}_i$, that's only a matter of sending which ones of the binary values '+1' or '-1' are used during the respective pilot symbols.

Regarding the scaled pilot sequences $\mathbf{w'}_i$, one may send the re-normalized pilot sequences to the receivers $210_i$, let the receivers demap and measure against the re-normalized pilot values '$\pm 1$', and then make some appropriate corrections in the VCU 130 to account for the actual transmit signal scaling by G or e.

Alternatively, one may directly send the scaled pilot sequences $\mathbf{w'}_i$ to the receivers $210_i$ and let the receivers demap against the actual transmit sample and report the right slicer error. For this latter option, one may further select the values for the scaling coefficients G and e within a limited set of discrete values properly chosen between 0 and 1 so as to encode the pilot sequence in a more compact way (e.g., 8, 16, 32 or 64 discrete values evenly spaced on a linear or logarithmic scale between 0 and 1).

The VCU 130 next gathers measurement samples as measured by the remote transceivers 210. The measurement sample as measured by the transceiver 210i over a victim line $L_i$ at carrier index k during symbol position t at the first and second measurement points are denoted as $e'^{t}_{i}(k)$ and $e^{t}_{i}(k)$ respectively. The transceivers 210 report both the real and imaginary part of the measurement samples to the access node 100 and further to the VCU 130.

The VCU 130 correlates K measurement samples $\{e^{t}_{i}(k)\}_{t=1..K}$ or $\{e'^{t}_{i}(k)\}_{t=1..K}$ as measured over a given victim line $L_i$ during a complete acquisition cycle with the K pilot values $\{w^{t}_{j}(k)\}_{t=1..K}$ or $\{w'^{t}_{j}(k)\}_{t=1..K}$ of the pilot sequence transmitted over a given disturber line Lj so as to obtain a crosstalk estimate from the disturber line Lj into the victim line $L_i$ at frequency index k. As the pilot sequences are mutually orthogonal, the contributions from the other disturber lines reduce to zero after this correlation step.

The precoding matrices $\mathbf{M = L-I}$ and $\mathbf{Q}$ are determined based on these correlation results by means of matrix inversion or decomposition, or by means of iterative additive or multiplicative updates. New equalization coefficients $r_{ii}^{-1}(k)$ may be sent to the remote transceivers 210s as a consequence of these matrix updates.

More specifically, the VCU 130 configures the transceiver 110 first to send the unprecoded and unscaled pilot signals $\mathbf{w}$, and to gather measurement samples $\mathbf{e'}$ carried out by the respective receivers 210 at the first measurement point. The VCU 130 computes all the components of the channel matrix $\mathbf{H}$, including the direct channel gains $h_{ii}$, from the correlation of $\mathbf{e'}$ with $\mathbf{w}$ as per equation (4). The VCU 130 may alternatively use measurement samples $\mathbf{e}$ at the second measurement point to estimate the normalized channel matrix $\mathbf{G}$.

The VCU next proceeds with the $\mathbf{QR}$ matrix decomposition of the so-determined matrix $\mathbf{H}$, thereby yielding the matrices $\mathbf{Q, L}$ and $\mathbf{S}$. The VCU 130 initializes the VPU 120 accordingly, and the applicable equalizing coefficients $\mathbf{S}^{-1}$ are sent to the remote receivers 210 (see $r_{ii}^{-1}(k)$ in fig. 6).

The matrix $\mathbf{L}$ is then used to optimize the values of the first and second scaling coefficients G and e as aforementioned.

The VCU 130 next configures the transceivers 110 to send precoded pilot signals $\mathbf{w'}$ scaled with the optimized coefficients G and e, and to gather measurement samples $\mathbf{e}$ or $\mathbf{e'}$ carried out by the respective receivers 210 at the first or second measurement point.

The VCU 130 can now estimate the concatenated channel $\mathbf{HP}$ (e') or $\mathbf{GP}$ (e), and further to refine the coefficients of the precoding matrices $\mathbf{M}$ and/or $\mathbf{Q}$ in order to drive the residual crosstalk down to zero.

Let us write the concatenated channel as:

$$\mathbf{HP} = \mathbf{DS\,L}^{-1}\mathbf{Q}^{*}\hat{\mathbf{Q}}\hat{\mathbf{L}} \quad (21),$$

wherein $\wedge$ denotes the respective channel estimates, and omitting modulo operation which are not expected to occur for $\mathbf{w'}$.

The equalized receive vector y" is then given by:

$$\mathbf{y}'' = \hat{\mathbf{S}}^{-1}\hat{\mathbf{D}}^{-1}\mathbf{DSL}^{-1}\mathbf{Q}^{*}\hat{\mathbf{Q}}\hat{\mathbf{L}}\mathbf{w}' + \hat{\mathbf{S}}^{-1}\hat{\mathbf{D}}^{-1}\mathbf{z},$$

and assuming perfect equalization:

$$\mathbf{y}''=\mathbf{L}^{-1}\mathbf{Q}^*\hat{\mathbf{Q}}\hat{\mathbf{L}}\mathbf{w}'+\tilde{\mathbf{z}}=(\mathbf{I}+\mathbf{C})\mathbf{w}'+\tilde{\mathbf{z}} \quad (22),$$

wherein $\tilde{\mathbf{z}}$ denotes the equalized background noise and **C** denotes the normalized residual crosstalk matrix.

If the receivers 210 are configured with the scaled pilot sequences and report the true slicer errors (as they can demap against the actual transmit samples), then the residual crosstalk matrix **C** can be estimated by direct correlation of the slicer error with the respective pilot sequences.

Indeed, the slicer error can be written in matrix form as:

$$\mathbf{E}=\mathbf{Y}''-\mathbf{W}'=\mathbf{C}\mathbf{W}'+\tilde{\mathbf{Z}} \quad (23),$$

wherein **E, Y"** and $\tilde{\mathbf{Z}}$ denote the NxK matrix representation of the slicer errors **e,** the properly equalized receive signal **y"** and the equalized background noise $\tilde{\mathbf{z}}$ as observed over the N subscriber lines $L_1$ to $L_N$ for K successive pilot symbols.

The correlation thus yields a noisy-estimates of the residual crosstalk matrix C:

$$\mathbf{E}\mathbf{W}'^{\mathsf{T}}=\mathbf{C}\mathbf{W}'\mathbf{W}'^{\mathsf{T}}+\tilde{\mathbf{Z}}\mathbf{W}'^{\mathsf{T}},$$

and

$$\frac{1}{a'}\mathbf{E}\mathbf{W}'^{\mathsf{T}}=\mathbf{C}+\frac{1}{a'}\tilde{\mathbf{Z}}\mathbf{W}'^{\mathsf{T}} \quad (24).$$

If the receivers 210 are configured with the re-normalized pilot sequences and demap against the normalized pilot values '±1', or if the receivers 210 are unaware of the pilot values that are being used and demap against the detected transmit samples, then the reported slicer error is wrong and shall be corrected within the VCU 130.

Let $\Lambda$ be a NxK re-normalizing matrix of the scaled pilot matrix **W',** meaning the matrix whose Hadamard product with the pilot matrix **W'** yields the normalized pilot vales '±1' while keeping the sign of the initial coefficients of **W'.**

For instance, the re-normalizing matrix of the aforementioned pilot matrix **W'**$_M$ is given by:

$$\Lambda=\begin{bmatrix} 1/G & 1/e & 1/e & 1/e \\ 1/e & 1/G & & \vdots \\ 1/e & & \ddots & \\ 1/e & \ldots & & 1/G \end{bmatrix}.$$

The reported slicer error can be written in matrix form as:

$$\mathbf{E}=\mathbf{Y}''-\Lambda\circ\mathbf{W}'=(\mathbf{I}+\mathbf{C})\mathbf{W}'+\tilde{\mathbf{Z}}-\Lambda\circ\mathbf{W}' \quad (25),$$

wherein $\circ$ denotes the Hadamard product (coefficient-wise multiplication).

The residual crosstalk matrix **C** can then be estimated by correlation with the respective pilot sequences:

$$\begin{aligned} \mathbf{E}\mathbf{W}'^{\mathsf{T}}&=(\mathbf{I}+\mathbf{C})\mathbf{W}'\mathbf{W}'^{\mathsf{T}}+\tilde{\mathbf{Z}}\mathbf{W}'^{\mathsf{T}}-(\Lambda\circ\mathbf{W}')\mathbf{W}'^{\mathsf{T}} \\ &=a'(\mathbf{I}+\mathbf{C})+\tilde{\mathbf{Z}}\mathbf{W}'^{\mathsf{T}}-(\Lambda\circ\mathbf{W}')\mathbf{W}'^{\mathsf{T}}, \end{aligned}$$

and

$$\mathbf{C}+\frac{1}{a'}\tilde{\mathbf{Z}}\mathbf{W}'^{\mathsf{T}}=\frac{1}{a'}\left(\mathbf{E}\mathbf{W}'^{\mathsf{T}}+(\Lambda\circ\mathbf{W}')\mathbf{W}'^{\mathsf{T}}\right)-\mathbf{I} \quad (26)$$

The solution found with the optimized scaling coefficients may further be compared with the solution obtained with precoded pilot signals at full power (i.e., e = G = 1). For some channels, it is better indeed to pay the price of having modulo, i.e. bias in the channel estimation, than transmitting pilots with very low power (i.e., e << 1). The two solutions are then compared and the one that minimizes the Mean Squared Error (MSE) is picked up as the most appropriate one.

Presently, the MSE is given by:

$$MSE = \frac{\sigma^2 N^2}{2\left(G^2 + (N-1)e^2\right)} + \left\| diag(\mathbf{R})\mathbf{\Gamma}\mathbf{w'} \right\| \quad (27),$$

wherein $\sigma^2$ denotes the power of the noise **z**, and the matrix $\Gamma$ contains the actual modulo shifts.

Also, the present invention can further be used for generating upstream pilot signals for characterization of upstream inter-channel couplings, for instance if some signal coordination is required at the subscriber side.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, Digital Signal Processor (DSP) hardware, network processor, Application Specific Integrated Circuit (ASIC), Field Programmable Gate Array (FPGA), etc. Other hardware, conventional and/or custom, such as Read Only Memory (ROM), Random Access Memory (RAM), and non volatile storage, may also be included.

**Claims**

1. **A method** for generating **pilot signals** for characterization of **residual inter-channel couplings** between **communication channels** after non-linear precoding, and comprising modulating **sequences of pilot signals** to be concurrently transmitted over the respective communication channels with respective **mutually-orthogonal pilot sequences,** *wherein* the method further comprises, for respective ones of **a sequence of channel probing occurrences** ($S_1$ to SK):

    - selecting **a communication channel** out of the communication channels for the respective one channel probing occurrence,
    - scaling **a so-modulated pilot signal** to be transmitted over the selected communication channel during the respective one channel probing occurrence with **a first non-null scaling coefficient** (G), and
    - scaling **further so-modulated pilot signals** to be transmitted over **other non-selected communication channels** during the respective one channel probing occurrence with **a second non-null scaling coefficient** (e) distinct from the first scaling coefficient,

    *wherein* the selecting is such that the first scaling coefficient is used exactly once within the respective sequences of so-scaled pilot signals and within the respective channel probing occurrences, and such that the sequences of so-scaled pilot signals are kept mutually-orthogonal,
    *and wherein* the method further comprises generating **sequences of so-scaled pilot signals** (**w'**) for transmission over the respective communication channels during the sequence of channel probing occurrences said generating including non-linear precoding.

2.  **A method** according to claim 1, *wherein* the method further comprises obtaining values for the first and second scaling coefficients from **estimates** of **nominal inter-channel couplings** between the communication channels.

3.  **A method** according to claim 2, *wherein* the estimates of the nominal inter-channel couplings are obtained by means of **unprecoded pilot signals** (**w**) transmitted over the respective communication channels.

4.  **A method** according to claim 2 or 3, *wherein* the values of the first and second scaling coefficients are optimized in order to maximize the transmit power or amplitude of the so-scaled pilot signals while confining the so-scaled pilot signals within **pre-determined signal bounds** designed to avoid modulo operation on the so-scaled pilot signals.

5.  **A method** according to claim 1, *wherein* frequency samples of the sequences of so-scaled pilot signals can be

$$\mathbf{W} = \begin{bmatrix} \pm G & \pm e & \pm e & \pm e \\ \pm e & \pm G & & \vdots \\ \pm e & & \ddots & \\ \pm e & \cdots & & \pm G \end{bmatrix} z \quad ,$$

    written in matrix-form as the above or as any permutation of the columns and/or rows thereof, or as any sign flip of the columns and/or rows thereof, *and wherein* G and e denote the first and second scaling coefficients respectively, and z denotes **a reference complex constellation point** (1).

6.  **A method** according to claim 5, *wherein* the method further comprises generating the matrix **W** by means of **an**

$$\mathbf{W}_i = \begin{bmatrix} \mathbf{W}_{i-1} & \mathbf{W}_{i-1} \\ -\mathbf{W}_{i-1}^{\mathsf{T}} & \mathbf{W}_{i-1}^{\mathsf{T}} \end{bmatrix} \quad ,$$

    **iterative algorithm** starting with **initial matrix $\mathbf{W}_0$** = [e]z and **iteration** the above, the superscript T denoting the matrix transpose, and next substituting G for the diagonal elements of the so-generated matrix $\mathbf{W}_i$.

7.  **A method** according to claim 1, *wherein* the method further comprises storing the sequences of so-scaled pilot signals in **a local data repository** for further characterization of the residual inter-channel couplings between the communication channels.

8.  **A method** for characterizing **residual inter-channel couplings** between **communication channels** after non-linear precoding, and comprising generating **pilot signals** (**w'**) according to any of claims 1 to 7, gathering **sequences of interference measurements** ($e_i$; $e'_i$) carried out over the respective communication channels during respective ones of the sequence of channel probing occurrences, correlating the sequences of interference measurements with respective ones of the sequences of so-scaled pilot signals, and characterizing the residual inter-channel couplings between the communication channels from the correlation.

9.  **A method** according to claim 8, *wherein* the method further comprises comparing the characterization of the residual inter-channel couplings obtained by means of the so-scaled pilot signals with **a further characterization** of the residual inter-channel couplings obtained by means of **mutually orthogonal and unscaled pilot signals** (**w**), and selecting an appropriate characterization based on **a mean squared error criterion.**

10. **A pilot signal generator** (311) for characterization of **residual inter-channel couplings** between **communication channels** after non-linear precoding, and configured to modulate **sequences of pilot signals** to be concurrently transmitted over the respective communication channels with respective **mutually-orthogonal pilot sequences,** *wherein* the pilot generator is further configured, for respective ones of **a sequence of channel probing occurrences** ($S_1$ to SK):

    - to select **a communication channel** out of the communication channels for the respective one channel probing occurrence,
    - to scale **a so-modulated pilot signal** to be transmitted over the selected communication channel during the respective one channel probing occurrence with **a first non-null scaling coefficient** (G), and
    - to scale **further so-modulated pilot signals** to be transmitted over **other non-selected communication channels** during the respective one channel probing occurrence with **a second non-null scaling coefficient**

**EP 3 062 471 B1**

(e) distinct from the first scaling coefficient,

*wherein* the selecting is such that the first scaling coefficient is used exactly once within the respective sequences of so-scaled pilot signals and within the respective channel probing occurrences, and such that the sequences of so-scaled pilot signals are kept mutually-orthogonal,
*and wherein* the pilot generator is further configured to generate **sequences of so-scaled pilot signals** (**w'**) for transmission over the respective communication channels during the sequence of channel probing occurrences wherein the pilot generator includes non-linear precoding.

**11.** **A network unit** comprising **a pilot signal generator** (110) according to claim 10.

**12.** **A network unit** according to claim 11, *wherein* the network unit is **an access node** (100) providing communication services to subscribers over respective **subscriber lines** ($L_1$ to $L_N$).


**Patentansprüche**

**1.** Verfahren zum Erzeugen von Pilotsignalen für die Charakterisierung von restlichen Interkanal-Kopplungen zwischen Kommunikationskanälen nach einer nicht linearen Vorcodierung und umfassend Moduliersequenzen von Pilotsignalen, die gemeinsam übertragen werden müssen über die entsprechenden Kommunikationskanäle mit entsprechenden gegenseitig orthogonalen Pilotsequenzen,
wobei das Verfahren weiterhin umfasst für entsprechende einer Sequenz von Kanalabtastungen ($S_1$ bis $S_K$):

- Auswählen eines Kommunikationskanals aus den Kommunikationskanälen für die entsprechende eine Kanalabtastung,
- Skalieren eines so modulierten Pilotsignals, das zu übertragen ist über den ausgewählten Kommunikationskanal während der entsprechenden einen Kanalabtastung mit einem ersten von Null verschiedenen Skalierungskoeffizienten (G), und
- Skalieren weiterer so modulierter Pilotsignale, die zu übertragen sind über andere nicht ausgewählte Kommunikationskanäle während der entsprechenden einen Kanalabtastung mit einem zweiten von Null verschiedenen Skalierungskoeffizienten (e), der sich von dem ersten Skalierungskoeffizienten unterscheidet,

wobei das Auswählen so ist, dass der erste Skalierungskoeffizient genau einmal verwendet wird innerhalb der entsprechenden Sequenzen so skalierter Pilotsignale und innerhalb der entsprechenden Kanalabtastungen, und so, dass die Sequenzen so skalierter Pilotsignale gegenseitig orthogonal gehalten werden,
und wobei das Verfahren weiterhin umfasst das Erzeugen von Sequenzen so skalierter Pilotsignale (w') für die Übertragung über die entsprechenden Kommunikationskanäle während der Sequenz der Kanalabtastungen, wobei besagtes Erzeugen eine nicht lineare Vorcodierung einschließt.

**2.** Verfahren nach Anspruch 1, wobei das Verfahren weiterhin umfasst das Erhalten von Werten für den ersten und zweiten Skalierungskoeffizienten aus Abschätzungen der nominellen Interkanal-Kopplungen zwischen den Kommunikationskanäle.

**3.** Verfahren nach Anspruch 2, wobei die Abschätzungen die nominellen Interkanal-Kopplungen erhalten werden mittels nicht vorcodierter Pilotsignale (w), die übertragen werden über die entsprechenden Kommunikationskanäle.

**4.** Verfahren nach Anspruch 2 oder 3, wobei die Werte des ersten und zweiten Skalierungskoeffizienten optimiert werden, um die Sendeleistung oder -amplitude der so skalierten Pilotsignale zu maximieren, während die so skalierten Pilotsignale innerhalb vorbestimmter Signalgrenzen begrenzt werden, die so ausgelegt sind, um Modulo-Betrieb der so skalierten Pilotsignale zu vermeiden.

**5.** Verfahren nach Anspruch 1, wobei die Frequenzmuster der so skalierten Pilotsignale in Matrixform geschrieben werden können als

$$W = \begin{bmatrix} \pm G & \pm e & \pm e & \pm e \\ \pm e & \pm G & & \vdots \\ \pm e & & \ddots & \\ \pm e & \dots & & \pm G \end{bmatrix} z$$

oder als Permutationen der Spalten und/oder Zeilen davon oder als ein beliebiger Vorzeichenwechsel der Spalten und/oder Zeilen davon und wobei G und e jeweils den ersten bzw. zweiten Skalierungskoeffizienten bezeichnen und z einen Referenzkomplexkonstellationspunkt (1) darstellt.

6. Verfahren nach Anspruch 5, wobei das Verfahren weiterhin umfasst das Erzeugen der Matrix W mittels eines

$$W_i = \begin{bmatrix} W_{i-1} & W_{i-1} \\ -W_{i-1}^T & W_{i-1}^T \end{bmatrix}$$

iterativen Algorithmus, startend mit der Startmatrix $W_0 = [e]z$ und Iteration mit , wobei der Superskript T die transponierte Matrix bezeichnet, und danach Substituieren von G durch die Diagonalelemente der so erzeugten Matrix $W_i$.

7. Verfahren nach Anspruch 1, wobei das Verfahren weiterhin umfasst das Speichern der Sequenzen der so skalierten Pilotsignale in einem lokalen Datenspeicher für die weitere Charakterisierung der restlichen Interkanal-Kopplungen zwischen den Kommunikationskanälen.

8. Verfahren zum Charakterisierung von restlichen Interkanal-Kopplungen zwischen Kommunikationskanälen nach einer nicht linearen Vorcodierung und umfassend das Erzeugen von Pilotsignalen (w') nach einem beliebigen der Ansprüche 1 bis 7, Erfassen von Sequenzen von Interferenzmessungen ($e_i$; $e'_i$), die ausgeführt werden über die entsprechenden Kommunikationskanäle während entsprechender der Sequenz von Kanalabtastungen, Korrelieren der Sequenzen von Interferenzmessungen mit entsprechenden der Sequenzen so skalierter Pilotsignale und Charakterisieren der restlichen Interkanal-Kopplungen zwischen den Kommunikationskanälen aus der Korrelation.

9. Verfahren nach Anspruch 8, wobei das Verfahren weiterhin umfasst das Vergleichen der Charakterisierung der restlichen Interkanal-Kopplungen, die erhalten werden mittels der so genannten Pilotsignale mit einer weiteren Charakterisierung der restlichen Interkanal-Kopplungen, die erhalten werden mittels gegenseitig orthogonaler und nicht skalierter Pilotsignale (w) und Auswählen einer geeigneten Charakterisierung auf Grundlage eines mittleren Quadratfehler-Kriteriums.

10. Pilotsignalgenerator (311) zum Charakterisieren von restlichen Interkanal-Kopplungen zwischen Kommunikationskanälen nach einer nicht linearen Vorcodierung, und konfiguriert zum Modulieren von Sequenzen von Pilotsignalen, die gemeinsam übertragen werden müssen über die entsprechenden Kommunikationskanäle mit entsprechend gegenseitig orthogonalen Pilotsequenzen, wobei der Pilotgenerator weiterhin konfiguriert ist für entsprechende einer Sequenz von Kanalabtastungen ($S_1$ bis $S_K$) zum:

   - Auswählen eines Kommunikationskanals aus den Kommunikationskanälen für die entsprechende eine Kanalabtastung,
   - Skalieren eines so modulierten Pilotsignals, das zu Übertragen ist über den ausgewählten Kommunikationskanal während der entsprechenden einen Kanalabtastung mit einem ersten von Null verschiedenen Skalierungskoeffizienten (G) und
   - Skalieren weiterer so modulierter Pilotsignale, die zu übertragen sind über andere nicht ausgewählte Kommunikationskanäle während der entsprechenden einen Kanalabtastung mit einem zweiten von Null verschiedenen Skalierungskoeffizienten (e), der sich von dem ersten Skalierungskoeffizienten unterscheidet,

   wobei das Auswählen so ist, dass der erste Skalierungskoeffizient genau einmal verwendet wird innerhalb der entsprechenden Sequenzen so skalierter Pilotsignale und innerhalb der entsprechenden Kanalabtastungen und so, dass die Sequenzen so skalierter Pilotsignale gegenseitig orthogonal gehalten werden,
   und wobei der Pilotgenerator weiterhin konfiguriert ist zum Erzeugen von Sequenzen so skalierter Pilotsignale (w') für die Übertragung über die entsprechenden Kommunikationskanäle während der Sequenz von Kanalabtastungen, wobei der Pilotgenerator eine nicht lineare Vorcodierung einschließt.

**EP 3 062 471 B1**

**11.** Netzwerkeinheit, umfassend einen Pilotsignalgenerator (110) nach Anspruch 10.

**12.** Netzwerkeinheit nach Anspruch 11, wobei die Netzwerkeinheit ein Zugangsknoten (100) ist, der Kommunikationsdienste für Abonnenten über entsprechende Abonnentenleitungen ($L_1$ bis $L_N$): umfasst.

**Revendications**

**1.** Procédé de génération de signaux pilotes pour la caractérisation de couplages inter-canaux résiduels entre des canaux de communication après un précodage non linéaire et comprenant la modulation de séquences de signaux pilotes devant être transmis simultanément sur les canaux de communication respectifs avec des séquences pilotes mutuellement orthogonales respectives,
le procédé comprenant en outre, pour des occurrences respectives d'une séquence d'occurrences de sondage de canaux ($S_1$ à $S_K$) :

- sélectionner un canal de communication parmi les canaux de communication pour l'occurrence de sondage de canaux respective,
- mettre à l'échelle un signal pilote ainsi modulé à transmettre sur le canal de communication sélectionné durant l'occurrence de sondage de canaux respective avec un premier coefficient de mise à l'échelle non nul (G), et
- mettre à l'échelle d'autres signaux pilotes ainsi modulés à transmettre sur d'autres canaux de communication non sélectionnés durant l'occurrence de sondage de canaux respective avec un second coefficient de mise à l'échelle non nul (e) distinct du premier coefficient de mise à l'échelle,

dans lequel la sélection est telle que le premier coefficient de mise à l'échelle est utilisé exactement une fois dans les séquences respectives de signaux pilotes ainsi mis à l'échelle et dans les occurrences de sondage de canaux respectives, et telle que les séquences des signaux pilotes ainsi mis à l'échelle sont maintenues mutuellement orthogonales,
et le procédé comprenant en outre la génération de séquences de signaux pilotes ainsi mis à l'échelle (w') à transmettre sur les canaux de communication respectifs durant la séquence d'occurrences de sondage de canaux, ladite génération comprenant un précodage non linéaire.

**2.** Procédé selon la revendication 1, le procédé comprenant en outre l'obtention de valeurs pour les premier et second coefficients de mise à l'échelle à partir d'estimations de couplages inter-canaux nominaux entre les canaux de communication.

**3.** Procédé selon la revendication 2, les estimations des couplages inter-canaux nominaux étant obtenues au moyen de signaux pilotes non précodés (w) transmis sur les canaux de communication respectifs.

**4.** Procédé selon la revendication 2 ou 3, dans lequel les valeurs des premier et second coefficients de mise à l'échelle sont optimisées afin de maximiser la puissance d'émission ou l'amplitude des signaux pilotes ainsi mis à l'échelle tout en confinant les signaux pilotes ainsi mis à l'échelle dans des limites de signal prédéterminées conçues pour éviter une opération modulo sur les signaux pilotes ainsi mis à l'échelle.

**5.** Procédé selon la revendication 1, dans lequel des échantillons de fréquence des séquences de signaux pilotes ainsi mis à l'échelle peuvent être écrits sous forme de matrice comme $W = \begin{bmatrix} \pm G & \pm e & \pm e & \pm e \\ \pm e & \pm G & & \vdots \\ \pm e & & \ddots & \\ \pm e & \dots & & \pm G \end{bmatrix} z$ , ou comme n'importe quelle permutation de ses colonnes et/ou rangées, ou comme n'importe bascule de signe de ses colonnes et/ou rangées,
et dans lequel G et e représentent le premier et le second coefficients de mise à l'échelle respectivement et z représente un point de constellation complexe de référence (1).

21

**6.** Procédé selon la revendication 5, le procédé comprenant en outre la génération de la matrice W au moyen d'un

$$W_i = \begin{bmatrix} W_{i-1} & W_{i-1} \\ -W_{i-1}^T & W_{i-1}^T \end{bmatrix}$$

algorithme itératif commençant par la matrice initiale W0 = [e]z et l'itération , l'exposant T représentant la transposée de matrice puis le remplacement par G des éléments en diagonale de la matrice ainsi générée Wi.

**7.** Procédé selon la revendication 1, le procédé comprenant en outre l'enregistrement des séquences des signaux pilotes ainsi mis à l'échelle dans un référentiel de données locales pour une caractérisation ultérieure des couplages inter-canaux résiduels entre les canaux de communication.

**8.** Procédé de caractérisation de couplages inter-canaux résiduels entre des canaux de communication après un précodage non linéaire et comprenant la génération de signaux pilotes (w') selon l'une quelconque des revendications 1 à 7, le rassemblement de séquences de mesures d'interférence ($e_i$ ; $e'_i$) réalisées sur les canaux de communication respectifs durant des occurrences respectives de la séquence d'occurrences de sondage de canaux, la mise en corrélation des séquences de mesures d'interférence avec des signaux respectifs des séquences de signaux pilotes ainsi mis à l'échelle et la caractérisation des couplages inter-canaux résiduels entre les canaux de communication à partir de la mise en corrélation.

**9.** Procédé selon la revendication 8, le procédé comprenant en outre la comparaison de la caractérisation des couplages inter-canaux résiduels obtenus au moyen des signaux pilotes ainsi mis à l'échelle avec une autre caractérisation des couplages inter-canaux résiduels obtenus au moyen de signaux pilotes mutuellement orthogonaux et non mis à l'échelle (w) et la sélection d'une caractérisation appropriée sur la base d'un critère d'erreur quadratique moyenne.

**10.** Générateur de signaux pilotes (311) de caractérisation de couplages inter-canaux résiduels entre des canaux de communication après un précodage non linéaire et configuré pour moduler des séquences de signaux pilotes devant être transmis simultanément sur les canaux de communication respectifs avec des séquences pilotes mutuellement orthogonales respectives,

le générateur de signaux pilotes étant en outre configuré, pour des occurrences respectives d'une séquence d'occurrences de sondage de canaux ($S_1$ à $S_K$) :

- pour sélectionner un canal de communication parmi les canaux de communication pour l'occurrence de sondage de canaux respective,
- pour mettre à l'échelle un signal pilote ainsi modulé à transmettre sur le canal de communication sélectionné durant l'occurrence de sondage de canaux respective avec un premier coefficient de mise à l'échelle non nul (G), et
- pour mettre à l'échelle d'autres signaux pilotes ainsi modulés à transmettre sur d'autres canaux de communication non sélectionnés durant l'occurrence de sondage de canaux respective avec un second coefficient de mise à l'échelle non nul (e) distinct du premier coefficient de mise à l'échelle,

dans lequel la sélection est telle que le premier coefficient de mise à l'échelle est utilisé exactement une fois dans les séquences respectives de signaux pilotes ainsi mis à l'échelle et dans les occurrences de sondage de canaux respectives, et telle que les séquences des signaux pilotes ainsi mis à l'échelle sont maintenues mutuellement orthogonales,

et le générateur de signaux pilotes étant en outre configuré pour générer des séquences de signaux pilotes ainsi mis à l'échelle (w') à transmettre sur les canaux de communication respectifs durant la séquence d'occurrences de sondage de canaux, ledit générateur de signaux pilotes comprenant un précodage non linéaire.

**11.** Unité de réseau comprenant un générateur de signaux pilotes (110) selon la revendication 10.

**12.** Unité de réseau selon la revendication 11, l'unité de réseau étant un nœud d'accès (100) fournissant des services de communication à des abonnés sur des lignes d'abonné respectives ($L_1$ à $L_N$).

**TX**
(BPSK)

6 (constellation boundaries)

3 (pre-compensation signal)

(+1) 1

2 (crosstalk signal)

(-1)

4 (modulo operation)

5 (TX sample)

**RX**
(BPSK)

6 (constellation boundaries)

(+1) 1

(-1)

9 (modulo operation)

5

7 (normalized channel)

8 (RX sample)

Fig. 1

Fig. 2

Fig. 3

Fig. 4

Fig. 5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014054043 A1

**Non-patent literature cited in the description**

- **ALCATEL-LUCENT.** *G.fast: Precoder Gain Scaling,* March 2013
- **M. TOMLINSON.** New Automatic Equalizer Employing Modulo Arithmetic. *Electronics Letters,* March 1971, vol. 7 (5-6), 138-139
- **H. HARASHIMA ; H. MIYAKAWA.** Matched-Transmission Technique for Channels with Inter Symbol Interference. *IEEE Trans. on Communications,* August 1972, vol. 20 (4), 774-780
- **G. GINIS ; J.M. CIOFFI.** A Multi-user Precoding Scheme Achieving Crosstalk Cancellation with Application to DSL Systems. *Proc. 34Th Asilomar Conference on Signals, Systems and Computers,* 2000
- **S. SINGH ; M. SORBARA.** *G.fast: Comparison of Linear and Non-Linear Pre-coding for G.fast on 100m BT Cable,* January 2013